# EUROPEAN PATENT SPECIFICATION

(11) **EP 4 549 410 B1**
(45) Date of publication and mention of the grant of the patent: **05.08.2026**
(21) Application number: 23838494.5
(22) Date of filing: 21.04.2023
(51) Int. Cl.: C03C 10/02, C03C 3/145

(54) **MICROCRYSTALLINE GLASS, PREPARATION METHOD, MICROCRYSTALLINE GLASS PRODUCT**
MIKROKRISTALLINES GLAS, HERSTELLUNGSVERFAHREN, MIKROKRISTALLINES GLASPRODUKT
VERRE MICROCRISTALLIN, PROCÉDÉ DE PRÉPARATION, PRODUIT DE VERRE MICROCRISTALLIN

(30) Priority: 12.07.2022 CN 202210822084
(43) Date of publication of application: 07.05.2025
(73) Proprietor: Honor Device Co., Ltd., Shenzhen, Guangdong 518040 (CN); Shanghai Institute of Optics and Fine Mechanics Chinese Academy of Sciences, Jiading Shanghai 201899 (CN)
(72) Inventor: WANG, Xin, Shanghai 201899 (CN); ZHANG, Xufeng, Shanghai 201899 (CN); HAN, Shuai, Shenzhen, Guangdong 518040 (CN); SHI, Zhenguo, Shenzhen, Guangdong 518040 (CN); XU, Wenbin, Shenzhen, Guangdong 518040 (CN)
(74) Representative: Thun, Clemens
(86) International application number: PCT/CN2023/089841
(87) International publication number: WO 2024/011993

(56) References cited:
- CN-A- 103 951 185
- CN-A- 104 692 657
- JP-A- 2002 145 642
- JP-A- 2007 197 249
- JP-A- 2010 052 953
- HAFNER H. C. ET AL: "Optical and Physical Properties of Some Calcium Aluminate Glasses", JOURNAL OF THE AMERICAN CERAMIC SOCIETY, vol. 41, no. 8, 1 August 1958 (1958-08-01), US, pages 315 - 323, XP093310139, ISSN: 0002-7820, DOI: 10.1111/j.1151-2916.1958.tb12923.x
- HUIFENG ZHAO, ZU CHENGKUI; HE KUN; LIU YONGHUA; WANG YANHANG: "Crystallization of Calcium Aluminate Infrared Glass-Ceramics", JOURNAL OF THE CHINESE CERAMIC SOCIETY, vol. 44, no. 5, 26 April 2016 (2016-04-26), pages 780 - 784, XP093129465, DOI: 10.14062/j.issn.0454-5648.2016.05.23

## Description

This application claims priority to Chinese Patent Application CN 117 430 332 A (Application No. 202210822084.1), filed with the China National Intellectual Property Administration on July 12, 2022 and entitled "NANOCRYSTAL GLASS, PREPARATION METHOD, NANOCRYSTAL GLASS PRODUCT, AND ELECTRONIC DEVICE".

### TECHNICAL FIELD

This application relates to the field of nanocrystal glass preparation technologies, and in particular, to nanocrystal glass, and a preparation method.

### BACKGROUND

In recent years, with rapid development of electronic devices, people have increasingly high requirements for anti-fall performance of the electronic devices. A mobile phone is used as an example. As a size of a screen of the mobile phone continuously increases, a cover plate of the mobile phone is also increasingly large, and use of 3D glass is gradually increased. Therefore, a consumer has a higher requirement for performance such as drop resistance and scratch resistance of the glass. Therefore, nanocrystal glass with higher mechanical performance is required to meet a user requirement.

With regard to the prior art, reference is made to Huifeng Zhao et al.: "Crystallization of Calcium Aluminate Infrared Glass-Ceramics", Journal of the Chinese Ceramic Society, vol. 44, no. 5, 26 April 2016, pages 780-784, XP093129465. Further reference is made to Hafner H. C. et al.: "Optical and Physical Properties of Some Calcium Aluminate Glasses", Journal of the American Ceramic Society, vol. 41, no. 8, 1 August 1958, pages 315-323, XP093310139, ISSN: 0002-7820.

### SUMMARY

In view of this, this application provides nanocrystal glass and a preparation method, to provide the nanocrystal glass that is more resistant to dropping and scratching, thereby resolving a problem that mechanical strength of existing glass cannot meet a user requirement. The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

Some implementations of this application provide nanocrystal glass. The following describes this application from a plurality of aspects. For implementations and beneficial effects of the following plurality of aspects,
According to a first aspect, this application provides nanocrystal glass according to claim 1.

According to the nanocrystal glass in this embodiment of this application, in a preparation process of the nanocrystal glass components such as an alkali metal and an alkaline earth metal are introduced into a calcium-aluminum binary system to improve glass-forming performance of the calcium-aluminum binary system and expand a glass-forming area of calcium aluminate glass, to obtain the calcium aluminate glass. The calcium aluminate glass has higher mechanical strength, and has better anti-fall performance and scratch resistance than those of conventional silicate glass and perhafnate glass. In addition, a temperature for glass melting is reduced, thereby reducing energy consumption.

In an embodiment of the first aspect of this application, the alkaline earth metal oxide includes one or more of MgO, SrO, and BaO.

In an embodiment of the first aspect of this application, the alkaline earth metal oxide includes at least two of MgO, SrO, and BaO, and content of various types of alkaline earth metal ions is 2%-10% in terms of mole percents. By adding an alkaline earth metal including the components, glass-forming performance of the calcium-aluminum binary system can be effectively improved, and hardness of the nanocrystal glass can be improved.

In an embodiment of the first aspect of this application, the alkali metal oxide includes one or more of Li₂O, Na₂O, and K₂O.

In an embodiment of the first aspect of this application, in terms of mole percents of components, the alkali metal oxide includes: Li₂O: 1%-10%; Na₂O: 2%-10%; and K₂O: 0%-10%. Proportions of the components further improve the glass-forming performance of the calcium-aluminum binary system.

In an embodiment of the first aspect of this application, the nanocrystal glass includes nanocrystalline particles, and the nanocrystalline particles may be of one or more crystal phases of CaAl₂O₄, MgAl₂O₄, and SrAl₂O₄.

In an embodiment of the first aspect of this application, an average particle size of the nanocrystalline particles is 1 nm-100 nm.

In an embodiment of the first aspect of this application, content of the nanocrystalline particles accounts for 50% or more of a total amount of the entire nanocrystal glass.

In an embodiment of the first aspect of this application, the average particle size of the nanocrystalline particles is 1 nm-50 nm, and the content of the nanocrystalline particles accounts for 80% or more of the total amount of the entire nanocrystal glass. Therefore, an increase in the content of the nanocrystalline particles can effectively improve the hardness of the nanocrystal glass.

In an embodiment of the first aspect of this application, Vickers hardness of the nanocrystal glass is 8.4 Gpa-9.1 Gpa.

In an embodiment of the first aspect of this application, Young's modulus of the nanocrystal glass is 110 GPa-129 GPa.

According to a second aspect, this application further provides a preparation method for nanocrystal glass according to claim 7.

In the preparation method for nanocrystal glass in this embodiment of this application, components such as an alkali metal and an alkaline earth metal are introduced into a calcium-aluminum binary system to improve glass-forming performance of the calcium-aluminum binary system and expand a glass-forming area of calcium aluminate glass, to obtain the calcium aluminate glass. The calcium aluminate glass has higher mechanical strength, and has better anti-fall performance and scratch resistance than those of conventional silicate glass and perhafnate glass. In addition, a temperature for glass melting is reduced, thereby reducing energy consumption.

In an embodiment of the second aspect of this application, the melting the mixed powder to obtain glass melt includes:
placing the mixed powder in a crucible, then placing the crucible in a melting furnace, and performing melting for 1 h-3 h at 1400°C-1600°C to obtain the glass melt.

In an embodiment of the second aspect of this application, the pouring the glass melt to obtain a glass precursor includes:
pouring the glass melt on a preheated mold to obtain a uniform glass precursor.

In an embodiment of the second aspect of this application, the performing annealing processing on the glass precursor, and cooling to a room temperature, to obtain the nanocrystal glass includes:
transferring the glass precursor to a muffle furnace for annealing processing, where the annealing processing means that a temperature of the muffle furnace is cooled to a temperature 30°C-50°C below a glass transition temperature, the temperature is maintained for 3 h-8 h, stepped cooling is performed at a cooling rate of 0.1°C/h-10°C/h, and a temperature of each phase is maintained for 3 h-8 h, until the temperature is cooled to a room temperature, to obtain the nanocrystal glass.

In an embodiment of the second aspect of this application, a manner of introducing Al₂O₃ is Al₂O₃ or Al(OH)₃, a manner of introducing CaO is CaCO₃, a manner of introducing the alkaline earth metal oxide is an alkaline earth metal carbonate, a manner of introducing the alkali metal oxide is an alkali metal carbonate, and a manner of introducing B₂O₃ is B(OH)₃. In an embodiment of the second aspect of this application, the alkaline earth metal carbonate includes one or more of MgCO₃, SrCO₃, and BaCO₃.

In an embodiment of the second aspect of this application, the alkaline earth metal carbonate includes MgCO₃, SrCO₃, and BaCO₃, and content of various types of alkaline earth metal ions is separately 2%-10% in terms of mole percents. By adding an alkaline earth metal including the components, glass-forming performance of the calcium-aluminum binary system can be effectively improved, hardness of the nanocrystal glass can be improved, and a temperature and energy consumption for glass melting can be reduced.

In an embodiment of the second aspect of this application, the alkali metal carbonate includes one or more of Li₂CO₃, Na₂CO₃, and K₂CO₃. An alkaline earth metal including the components can effectively improve glass-forming performance of the calcium-aluminum binary system and hardness of the nanocrystal glass.

In an embodiment of the second aspect of this application, mole percents of components of the alkali metal oxide are respectively: Li₂O: 1%-10%; Na₂O: 2%-10%; and K₂O: 0%-10%.

According to a third aspect, this application further provides a nanocrystal glass product, where the nanocrystal glass product is made of the nanocrystal glass according to any one of the first aspect and the embodiments thereof.

The application further discloses an electronic device, including:
a main middle frame;
a cover plate, where the cover plate is disposed on a side of the main middle frame; and
a display screen, where the display screen is disposed on a side that is of the main middle frame and that is opposite to the cover plate;
where at least one of the cover plate and the display screen includes the nanocrystal glass according to any one of the first aspect and the embodiments thereof.

### BRIEF DESCRIPTION OF DRAWINGS

FIG. 1 is a schematic diagram of a structure of a mobile phone according to an embodiment of this application;
FIG. 2A is an exploded view of a structure of a mobile phone according to an embodiment of this application;
FIG. 2B is a schematic diagram of another structure of a mobile phone according to an embodiment of this application;
FIG. 3 shows a scanning electron microscope photo of a microstructure of nanocrystal glass according to an embodiment of this application;
FIG. 4 shows a curve chart of transmittance of nanocrystal glass according to an embodiment of this application; and
FIG. 5 is a flowchart of a preparation method for nanocrystal glass according to an embodiment of this application.

### DESCRIPTION OF EMBODIMENTS

The following clearly and completely describes embodiments of this application with reference to the accompanying drawings.

Nanocrystal glass (Nanocrystal glass) is also referred to as ceramic glass, is an inorganic non-metallic material, and is a new material that has both a glass characteristic and a ceramic characteristic. There is no regular atomic arrangement in common glass, which is also a reason for glass fragility. The nanocrystal glass, like ceramic, contains crystals, and atomic arrangement of the crystals is regular. Therefore, the nanocrystal glass has higher brightness than that of the ceramic and stronger toughness than that of glass.

To facilitate understanding of the technical solutions of this application, the following first describes the technical problem of this application.

Calcium aluminate glass is a kind of nanocrystal glass, and has better mechanical performance than conventional glass. However, a glass-forming area of a calcium-aluminum binary system is extremely limited, and glass-forming can be implemented only when content of CaO is in a range of 61 mol%-66 mol%. Consequently, glass-forming performance of conventional calcium aluminate glass is poor, which affects application of glass of this system.

To resolve the foregoing technical problem, this application provides nanocrystal glass. In a process of preparing the nanocrystal glass, components such as an alkali metal and an alkaline earth metal are introduced into glass of the calcium-aluminum binary system. In this way, glass-forming performance of the nanocrystal glass is improved, and the glass-forming area of the calcium aluminate glass is expanded, so that the nanocrystal glass provided in this application is obtained. The nanocrystal glass provided in this application has higher mechanical strength, and anti-fall performance and scratch resistance of the nanocrystal glass are better than those of the conventional glass.

The nanocrystal glass in this application may be applied to an electronic device. For example, the nanocrystal glass may be fabricated into a cover plate of the electronic device, for example, glass of a front cover plate of a screen or a rear cover (a backplane) of a mobile phone, and fabricated into a housing and the like.

The following describes an application scenario of the nanocrystal glass of embodiments of this application by using an example in which the nanocrystal glass is applied to a mobile phone.

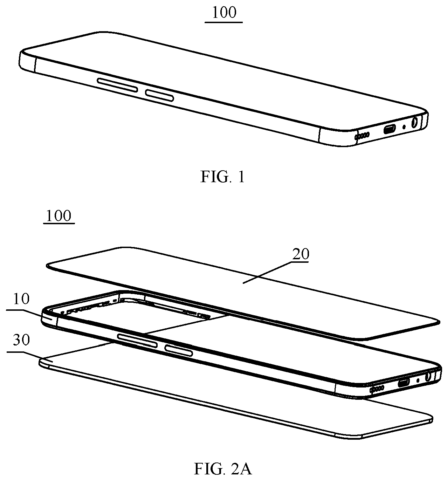

Referring to FIG. 1, FIG. 1 is a schematic diagram of a structure of a mobile phone according to an embodiment of this application. As shown in FIG. 1, a mobile phone 100 may include a rear cover, a display screen, a main middle frame, a camera protective cover plate, and the like. Some or all of these components may be made of the nanocrystal glass.

Referring to FIG. 2A, FIG. 2A is an exploded view of a partial structure of a mobile phone according to an embodiment of this application. As shown in FIG. 2A, the mobile phone 100 may include a main middle frame 10, a rear cover 20, and a display screen 30, where the rear cover 20 and the display screen 30 are respectively disposed on two sides of the main middle frame 10, to seal and cover components disposed inside the middle frame. The display screen 30 and/or the rear cover 20 may be made of the nanocrystal glass. In this embodiment of the present invention, the display screen 30 and/or the rear cover 20 may be completely made of the nanocrystal glass or may be partially made of the nanocrystal glass. In this embodiment of the present invention, the display screen 200 may be a touch screen.

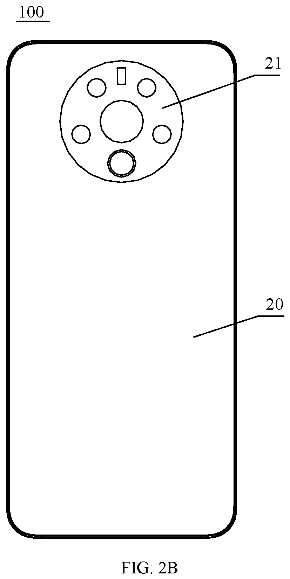

In an embodiment of this application, FIG. 2B is a schematic diagram of another structure of a mobile phone according to an embodiment of this application. A camera protective cover 21 is disposed on the rear cover 20 of the mobile phone 100, and the camera protective cover 21 is configured to cover a camera assembly to better protect the camera assembly. The camera protective cover may be completely or partially made of the nanocrystal glass of this application. In this embodiment of this application, the camera protective cover is not limited to a form shown in FIG. 2A.

The nanocrystal glass with excellent anti-fall performance is used for the mobile phone of this application, so that the mobile phone has performance such as drop resistance and scratch resistance, thereby improving reliability of a terminal product and improving user experience.

In some embodiments of this application, the electronic device may alternatively be a notebook computer, a tablet computer, a desktop computer, or another electronic device, or may be a smart wearable device, for example, a watch or a wristband. A type of the electronic device is not limited in this application.

In some embodiments, the nanocrystal glass may be further applied to another scenario, for example, applied to a part that can be made of glass in a vehicle. For example, a vehicle light cover, a windshield, glass of an in-vehicle instrument panel, or the like may be made of the nanocrystal glass in this application.

In some embodiments, the nanocrystal glass may also be processed into glass products with different dimensions for use in different devices, for example, may be fabricated into a 2D, 2.5D, or 3D glass product. This application sets no limitation on application of the nanocrystal glass and a form of the glass product.

The following describes in detail the nanocrystal glass in embodiments of this application with reference to the accompanying drawings.

In this embodiment of this application, the nanocrystal glass includes components shown in Table 1 in terms of mole percents of oxides.

**Table 1**

| Serial number | Component | mol% |
|---|---|---|
| 1 | Al₂O₃ | 30-55 |
| 2 | CaO | 25-55 |
| 3 | Alkaline earth metal oxide | 8-20 |
| 4 | Alkali metal oxide | 3-15 |
| 5 | B₂O₃ | 0-10 |
| 6 | Sb₂O₃ | 0-1 |

In this embodiment of this application, alkaline earth metal ions such as magnesium oxide (MgO), strontium oxide (SrO), and barium oxide (BaO) are added to a glass system that contains Al₂O₃ and CaO, to improve a glass-forming ability. Glass is an amorphous substance. After cations with high field strength, such as, Mg ions, are added, free oxygen atoms in a glass network are attracted to form a plurality of tetrahedral or hexahedral structures. In this way, a network structure tends to be tight, and it is easier to form the glass. A structure of magnesium oxide (MgO) in the glass is relatively complex. Usually, a coordination form in the glass network changes with alkali metal content. In the glass network, penta-coordinated and hexa-coordinated Mg has a similar effect to an alkali metal, and mainly plays a role of destroying a structure of the glass network. However, tetra-coordinated Mg exists in the glass in a form of a [MgO₄] structural unit, to enhance connection between glass network formers. Strontium oxide (SrO) has important biological activity, and can improve compatibility of glass with biological cells in biological glass. Barium oxide (BaO) may mainly improve glass refractive index and optical absorptivity, and reduce a temperature for glass melting.

Alkali metal ions are added to the glass system containing Al₂O₃ and CaO, to reduce glass melting viscosity layers and improve the glass-forming ability. Li₂O, Na₂O, and K₂O are network modifiers, which can reduce the glass melting viscosity layers and promotes rapid glass melting and clarification. In addition, as necessary components, Li₂O and Na₂O play a role of enabling the glass to contain enough Li⁺ and Na⁺ to be respectively exchanged with Na⁺ and K⁺ in molten potassium salt, to generate high compressive stress on a surface of the glass.

In addition, the alkaline earth metal ion components and the alkali metal ion components are simultaneously added to the glass system of Al₂O₃ and CaO, to form mixed cation effects in the original calcium aluminate glass, including a mixed alkali effect and a mixed alkaline earth effect. Generation of the mixed cation effects can effectively improve glass-forming performance of the glass, and reduce the temperature and energy consumption for glass melting.

In this embodiment of this application, the components are proportioned based on the component content in Table 1 to obtain the nanocrystal glass. Therefore, glass-forming performance of the glass can be effectively improved, the glass-forming area of the calcium aluminate glass is expanded, strong compressive stress is generated on the surface of the glass, mechanical strength of the nanocrystal glass is improved, anti-fall performance and scratch resistance of the nanocrystal glass are better than those of conventional nanocrystal glass, and the temperature and the energy consumption for glass melting can be reduced.

In an embodiment of this application, the alkaline earth metal oxide includes one or more of MgO, SrO, and BaO. The alkaline earth metal oxide includes at least two of MgO, SrO, and BaO, and content of various types of alkaline earth metal ions is 2%-10% in terms of mole percents. This proportion can expand a glass-forming area of a calcium-aluminum binary system, thereby improving the glass-forming ability, and improving mechanical performance of the nanocrystal glass.

In this embodiment of this application, a manner of introducing MgO may be MgCO₃, a manner of introducing SrO is SrCO₃, and a manner of introducing BaO is BaCO₃. In some embodiments, the alkaline earth metal oxide may alternatively be introduced in another manner, for example, in a manner of introducing a metal oxide, for example, directly introducing MgO, SrO, and BaO. A manner of introducing the metal oxide is not limited in this application.

In another embodiment of this application, the alkali metal oxide includes one or more of Li₂O, Na₂O, and K₂O. Mole percents of the components in the alkali metal oxide may be as follows: A mole percent of Li₂O is 1%-10%. In an embodiment of this application, the mole percent of Li₂O may be 1%, 2%, 3%, 4%, 5%, 6%, 7%, 8%, 9%, 10%, or the like; a mole percent of Na₂O is 2%-10%, for example, may be 2%, 3%, 4%, 5%, 6%, 7%, 8%, 9%, 10%, or the like; and a mole percent of K₂O is 0%-10%, for example, may be 1%, 2%, 3%, 4%, 5%, 6%, 7%, 8%, 9%, 10%, or the like.

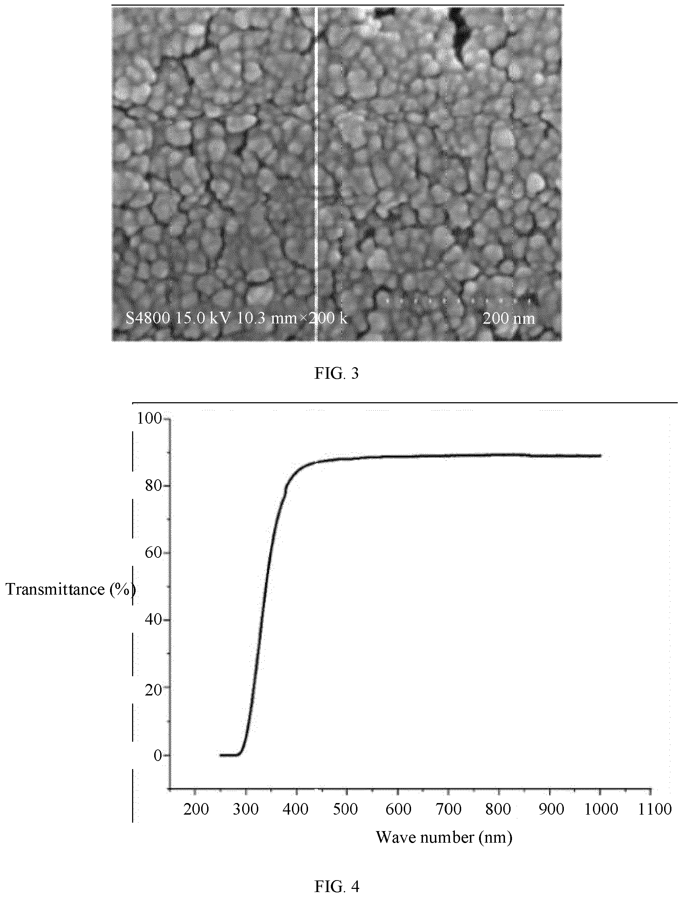

Referring to FIG. 3, FIG. 3 shows a scanning electron microscope photo of a microstructure of nanocrystal glass according to an embodiment of this application. As shown in FIG. 3, after heat treatment of different duration and temperatures is performed on the nanocrystal glass having the foregoing components, nanocrystalline particles in the figure may be obtained. The nanocrystalline particles may be of one or more crystal phases of CaAl₂O₄, MgAl₂O₄, and SrAl₂O₄. A particle size of the nanocrystalline particles may be several to hundreds of nanometers. In an embodiment of this application, an average particle size of the nanocrystalline particles is 1 nm-100 nm, and nanocrystalline content may account for 50% or more of the entire nanocrystal glass. In another embodiment of this application, the average particle size of the nanocrystalline particles is 1 nm-50 nm, and the nanocrystalline content may account for 80% or more of the entire nanocrystal glass. Therefore, strength of the nanocrystal glass is greatly improved.

In an embodiment of this application, the glass obtained after microcrystallization may be a transparent glass material. The transparent glass material is applied to the glass of the cover plate of the mobile phone shown in FIG. 1, thereby improving anti-fall performance of the cover plate of the mobile phone with high transmittance. The transparent glass material is applied to the camera protective cover shown in FIG. 2B, so that the camera protective cover has high transmittance while resisting falling, thereby better meeting a requirement of a camera for light transmission.

Referring to FIG. 4, FIG. 4 shows a curve chart of transmittance of nanocrystal glass according to an embodiment of this application. As shown in FIG. 4, transmittance of the nanocrystal glass in this application may be 90% or more within a visible light range, which can meet optical requirements of the electronic device for display and shooting, and is applicable to fabricating the cover plate of the display screen and the camera protective cover plate of the electronic device.

In some embodiments, the glass obtained after microcrystallization may alternatively be a non-transparent material. The non-transparent material may be used to fabricate the backplane of the mobile phone shown in FIG. 1.

In this embodiment of this application, the transparent glass material or the non-transparent glass material may be obtained by adjusting the components in the entire glass system. For example, when the transparent glass material is prepared, in a process of preparing the nanocrystal glass, Sb₂O₃ of 0 mol%-1 mol%, for example, 0.1 mol%, 0.2 mol%, 0.3 mol%, 0.4 mol%, 0.5 mol%, 0.6 mol%, 0.7 mol%, 0.8 mol%, 0.9 mol%, or 1 mol%, may be added, and the heat treatment temperature and duration may be adjusted, to obtain the transparent glass material. When the non-transparent glass material is prepared, Sb₂O₃ may not be added, and the heat treatment temperature and duration are appropriately adjusted, to obtain the non-transparent glass material.

In this embodiment of this application, B₂O₃ in the calcium aluminate glass is used as a network former of basic glass. In this embodiment of this application, content of B₂O₃ may be 1 mol%, 2 mol%, 3 mol%, 4 mol%, 5 mol%, 6 mol%, 7 mol%, 8 mol%, 9 mol%, or 10 mol%. This proportion can reduce glass viscosity, facilitate glass production, and change glass-forming performance of the glass.

In some embodiments, to further improve hardness of the nanocrystal glass, low-temperature chemical strengthening (ion exchange chemical strengthening) may be further performed on the nanocrystal glass after the nanocrystal glass is prepared, to obtain strengthened nanocrystal glass. For example, the nanocrystal glass may be immersed in a bath of an ion exchange solution, the ion exchange solution may be sprayed on the nanocrystal glass, or the ion exchange solution may be physically applied to the nanocrystal glass in any other manner, so that the nanocrystal glass contacts the ion exchange solution. By performing ion exchange chemical strengthening on the nanocrystal glass, a compressive stress layer may be formed on a surface of the nanocrystal glass, so that mechanical performance of the strengthened nanocrystal glass is further improved.

In some embodiments, ion exchange chemical strengthening may be divided into a plurality of strengthening steps. For example, when chemical strengthening is performed for two times, a temperature and duration for each time may be adjusted based on different requirements, thereby further improving an ion exchange depth and surface compressive stress, and improving mechanical performance of the nanocrystal glass.

The following describes a preparation method for nanocrystal glass in this application with reference to a specific embodiment.

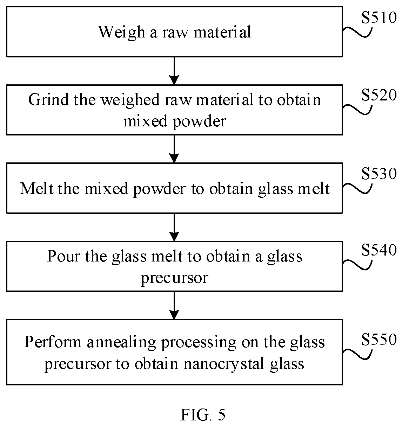

Referring to FIG. 5, FIG. 5 is a flowchart of a preparation method for nanocrystal glass according to an embodiment of this application. As shown in FIG. 5, the preparation method includes S510-S540.

S510: Weigh a raw material.

In this embodiment of this application, the raw material may include Al₂O₃ or Al(OH)₃, CaCO₃, an alkaline earth metal carbonate, an alkali metal carbonate, B(OH)₃, and Sb₂O₃ raw material. Al(OH)₃ serves as an introduction form of Al₂O₃, CaCO₃ serves as an introduction form of CaO, and B(OH)₃ serves as an introduction form of B₂O₃. In terms of mole percents of oxides, addition amounts of the components of the raw material are respectively: Al₂O₃: 30%-55%, for example, 30%, 35%, 40%, 45%, 50%, or 55%; CaO: 25%-55%, for example, 25%, 30%, 35%, 45%, 50%, or 55%; an alkaline earth metal oxide: 8%-20%, for example, 8%, 9%, 10%, 11%, 12%, 13%, 14%, 15%, 16%, 17%, 18%, 19%, or 20%; an alkali metal oxide: 3%-15%, for example, 3%, 4%, 5%, 6%, 7%, 8%, 9%, 10%, 11%, 12%, 13%, 14%, or 15%; B₂O₃: 0%-10%, for example, 1%, 2%, 3%, 4%, 5%, 6%, 7%, 8%, 9%, or 10%; and Sb₂O₃: 0%-1%, for example, 0.1%, 0.2%, 0.3%, 0.4%, 0.5%, 0.6%, 0.7%, 0.8%, 0.9%, or 1%.

In this embodiment of this application, a defect in the glass may be eliminated by adding Sb₂O₃, so that the glass is colorless and transparent, and a problem that the calcium aluminate glass is brown is improved. In this way, the glass has better transmittance, and the optical requirements of the electronic device for display and shooting can be met.

In this embodiment of this application, B₂O₃ within 10% limited in this application is added, to effectively change glass-forming performance of the entire glass system, and properly reduce glass viscosity, thereby resolving a problem that processing is affected by excessively high viscosity in a process.

In this embodiment of this application, the alkaline earth metal carbonate may be one or more of MgCO₃, SrCO₃, and BaCO₃. That is, the alkaline earth metal carbonate serves as an introduction form of the alkaline earth metal oxide. When two or more components are included in the alkaline earth metal oxide, content of various types of alkaline earth metal ions separately accounts for 2%-10%, for example, 2%, 3%, 4%, 5%, 6%, 7%, 8%, 9%, or 10% of a total amount of the raw material in terms of mole percents of oxides. A total amount of the alkaline earth metal oxide accounts for 8%-20% of the total amount of the raw material. The proportions can enhance connection between glass network formers, improve mechanical performance of the nanocrystal glass, improve glass refractive index and optical absorptivity, and reduce a temperature for glass melting, thereby reducing melting energy consumption.

In an embodiment of this application, the alkali metal oxide includes one or more of Li₂O, Na₂O, and K₂O. When there are a plurality of alkali metal oxides, percentages of metal ion oxides in the total amount of the raw material are: Li₂O: 1%-10%, for example, 1%, 2%, 3%, 4%, 5%, 6%, 7%, 8%, 9%, or 10%; Na₂O: 2%-10%, for example, 2%, 3%, 4%, 5%, 6%, 7%, 8%, 9%, or 10%; and K₂O: 0%-10%, for example, 1%, 2%, 3%, 4%, 5%, 6%, 7%, 8%, 9%, or 10%. Total content of the alkali metal oxides accounts for 3%-15% of the total amount of the raw material. The proportions can reduce glass melting viscosity layers, promote rapid glass melting and clarification, generate high compressive stress on a surface of the glass, and improve mechanical performance.

S520: Grind the weighed raw material to obtain mixed powder.

The weighed raw material is mixed and fully ground to form the mixed powder.

S530: Melt the mixed powder to obtain glass melt.

In this embodiment of this application, the mixed powder may be placed in a crucible, the crucible is placed in a melting furnace, and melting is performed for 1 h-3 h at a temperature of 1400°C-1600°C to obtain the glass melt. A melting temperature may be 1410°C, 1450°C 1500°C, 1550°C, 1600°C, or the like. Melting duration may be 1 h, 1.5 h, 2 h, 2.5 h, or 3 h.

S540: Pour the glass melt to obtain a glass precursor.

In this embodiment of this application, the glass melt may be poured on a preheated mold, to prevent an excessively large temperature difference from affecting a glass-forming effect. In this way, a transparent and uniform glass precursor is obtained.

S550: Perform annealing processing on the glass precursor to obtain nanocrystal glass.

In an embodiment of this application, the glass precursor is transferred to a muffle furnace for annealing processing, where an annealing temperature is a temperature 30°C-50°C below a glass transition temperature (Tg); and the temperature is maintained for 3 h-8 h, stepped cooling is performed at a cooling rate of 0.1°C/h-10°C/h, and a temperature of each phase is maintained for 3 h-8 h, and then the temperature is cooled to a room temperature, to obtain the nanocrystal glass. The nanocrystal glass is processed to obtain a glass product. For example, the nanocrystal glass that is taken out may be processed into a glass sheet product having a thickness of 0.5 mm-1 mm.

In an embodiment of this application, the cooling rate may be 0.5°C/h, 1°C/h, 1.5°C/h, 2°C/h, 3°C/h, 4°C/h, 5°C/h, 6°C/h, 7°C/h, 8°C/h, 9°C/h, 10°C/h, or the like.

It should be noted that in the foregoing description of the nanocrystal glass, example proportions of the chemical components and a reason why the chemical components can improve glass-forming performance and mechanical performance of the nanocrystal glass are already described in detail. For details, refer to specific descriptions of the nanocrystal glass. Details are not described herein again.

In addition, a step method not mentioned in this application may use a method in the conventional technology. Details are not described in this application.

With reference to a specific embodiment, the following describes a performance indicator of the nanocrystal glass in embodiments of this application.

Implementation steps of the specific embodiment are as follows. For specific parameter values, refer to Table 2.
1) Weigh a raw material. The raw material is weighed based on mole percents of metal oxides shown in Table 2.
2) Uniformly mix the weighed raw material, maintain a temperature at 1600°C for 2 hours for melting, then perform pouring molding, perform annealing to maintain the temperature at 700°C for 5 h, and cool the temperature to a room temperature at a cooling rate of 1°C per minute, to obtain calcium aluminate glass.
3) Process an obtained glass precursor into a 10 mm×10 mm×1 mm glass sheet, and polish both sides of the glass sheet.
4) Perform heat treatment on the calcium aluminate glass for microcrystallization (heat treatment conditions in embodiments are shown in Table 2), where tested Vickers hardness and Young's modulus of glass obtained after heat treatment are respectively listed in Table 2.
5) Further perform ion exchange strengthening on the glass sheet obtained after heat treatment. Ion exchange conditions are shown in Table 2, and Vickers hardness of strengthened calcium aluminate nanocrystal glass is shown in Table 2. One-stage ion exchange in Table 2 includes: performing, in molten potassium salt, ion exchange on the glass obtained after heat treatment.

In this embodiment, the molten potassium salt may be potassium nitrate, and ion exchange is performed at a temperature of 350°C-600°C for 0.5 hours-3 hours. Two-stage ion exchange includes: performing, in first molten salt for the first time, ion exchange on the glass obtained after heat treatment, and then performing ion exchange in second molten salt for the second time. The first molten salt is mixed molten salt of potassium nitrate and sodium nitrate, and ion exchange is performed at a temperature of 350°C-600°C for 0.5 h-3 h for the first time; and the second molten salt is potassium nitrate, and ion exchange is performed at a temperature of 350°C-600°C for 0.5 h-3 h for the second time.

Table 2 is a parameter data table corresponding to the foregoing implementation steps used in seven different embodiments. Only embodiments 1 and 5 are in accordance with the present invention.

**Table 2**

| Embodiment | 1 | 2 | 3 | 4 | 5 | 6 | 7 |
|---|---|---|---|---|---|---|---|
| AL₂O₃ (mol%) | 30 | 30 | 36.5 | 37 | 40.5 | 45.5 | 55 |
| CaO (mol%) | 38 | 55 | 45 | 45 | 35 | 26 | 26 |
| Mg (mol%) | 10 | 7 | 10 | 10 | 3 | 10 | / |
| Sr (mol%) | / | / | / | / | 3 | 5 | / |
| Ba (mol%) | 5 | / | / | / | 3 | / | 7 |
| Li (mol%) | 3 | / | / | / | 5 | / | 3 |
| Na (mol%) | 10 | 3 | 4 | 4 | 7 | 5 | 5 |
| K (mol%) | / | / | / | / | / | 5 | / |
| B₂O₃ (mol%) | 3 | 4 | 4 | 4 | 3 | 3 | 3 |
| Sb₂O₃ (mol%) | 1 | 1 | 0.5 | 0 | 0.5 | 0.5 | 1 |
| Temperature for heat treatment (°C) | 800 | 820 | 850 | 840 | 850 | 870 | 900 |
| Duration for heat treatment (h) | 6 | 6 | 6 | 6 | 6 | 6 | 6 |
| Vickers hardness after heat treatment (GPa) | 7.9 | 8.1 | 8.4 | 8.4 | 8.5 | 8.5 | 8.6 |
| Young's modulus after heat treatment (GPa) | 110 | 113 | 121 | 120 | 122 | 125 | 129 |
| Temperature for one-stage ion exchange (°C) | 420 | 420 | 420 | 420 | 420 | 450 | 420 |
| Duration for one-stage ion exchange (h) | 0.5 | 2 | 2 | 3 | 1 | 2 | 1.5 |
| Temperature for two-stage ion exchange (°C) | 450 | / | / | / | 430 | / | 500 |
| Duration for two-stage ion exchange (h) | 1 | / | / | / | 2 | / | 1 |
| Vickers hardness after ion exchange (GPa) | 8.4 | 8.7 | 9.0 | 8.9 | 9.0 | 9.1 | 9.1 |

It can be learned from Table 2 that the nanocrystal glass in this embodiment of this application has high Vickers hardness and Young's modulus, and the Vickers hardness and the Young's modulus of the nanocrystal glass are respectively 8.4 GPa-9.1 GPa and 110 GPa-129 GPa.

A test standard for the Vickers hardness is based on a method in the national standard GB/T 37900-2019, where a pressure used is 0.1 kgf and pressure maintaining duration is 10s. For a test of the Young's modulus, refer to a method in the national standard GB/T 7962.6-2010.

In addition, hardness of the nanocrystal glass in this application is compared with that of conventional silicate glass in the conventional technology. Same test methods are used, and conventional commercial nanocrystal glass is used as a comparative example. In the comparative example, Vickers hardness and Young's modulus after chemical strengthening of the glass are respectively 6.3 GPa and 100 GPa.

It can be learned from Table 2 and a test result of the nanocrystal glass in the comparative example that the nanocrystal glass obtained based on the preparation method for nanocrystal glass in this embodiment of this application has higher Vickers hardness and Young's modulus. The Vickers hardness and the Young's modulus of the nanocrystal glass are respectively 8.4 GPa-9.1 GPa and 110 GPa-129 GPa, which are far higher than Vickers hardness and Young's modulus of glass in the conventional technology.

## Claims

1. Nanocrystal glass, wherein the nanocrystal glass comprises the following components in terms of mole percents of oxides:
Al₂O₃: 30%-55%;
CaO: 25%-55%;
B₂O₃: 0%-10%;
Sb₂O₃: 0%-1%;
an alkaline earth metal oxide: 8%-20%; and
an alkali metal oxide: 3%-15%; wherein
the alkaline earth metal oxide comprises one or more of MgO, SrO, and BaO; and
the alkali metal oxide comprises Li₂O: 1%-10%; Na₂O: 2%-10%; and K₂O: 0%-10%.

2. The nanocrystal glass according to claim 1, wherein the alkaline earth metal oxide comprises at least two of MgO, SrO, and BaO, and content of various types of alkaline earth metal ions is 2%-10% in terms of mole percents.

3. The nanocrystal glass according to claim 1, comprising nanocrystalline particles, wherein the nanocrystalline particles may be of one or more crystal phases of CaAl₂O₄, MgAl₂O₄, and SrAl₂O₄; wherein content of the nanocrystalline particles accounts for 50% or more of a total amount of the entire nanocrystal glass.

4. The nanocrystal glass according to claim 3, wherein the average particle size of the nanocrystalline particles is 1 nm-50 nm, and the content of the nanocrystalline particles accounts for 80% or more of the total amount of the entire nanocrystal glass.

5. The nanocrystal glass according to any one of claims 1-4, wherein Vickers hardness of the nanocrystal glass is 8.4 Gpa-9.1 Gpa.

6. The nanocrystal glass according to any one of claims 1-4, wherein Young's modulus of the nanocrystal glass is 110 GPa-129 GPa.

7. A preparation method for nanocrystal glass, comprising:
weighing (S510) a raw material, wherein, in terms of mole percents of oxides, components of the raw material are: Al₂O₃: 30%-55%; CaO: 25%-55%; B₂O₃: 0%-10%; and Sb₂O₃: 0%-1%; an alkaline earth metal oxide: 8%-20%; and an alkali metal oxide: 3%-15%, wherein the alkaline earth metal oxide comprises one or more of MgO, SrO, and BaO, and the alkali metal oxide comprises Li₂O: 1%-10%; Na₂O: 2%-10%; and K₂O: 0%-10%;
grinding (S520) the weighed raw material to obtain mixed powder;
melting (S530) the mixed powder to obtain glass melt;
pouring (S540) the glass melt to obtain a glass precursor; and
performing (S550) annealing and heat treatment on the glass precursor to obtain the nanocrystal glass.

8. The method according to claim 7, wherein the melting (S530) the mixed powder to obtain glass melt comprises:
placing the mixed powder in a crucible, then placing the crucible in a melting furnace, and performing melting for 1 h-3 h at 1400°C-1600°C to obtain the glass melt.

9. The method according to claim 7, wherein the pouring (S540) the glass melt to obtain a glass precursor comprises:
pouring the glass melt on a preheated mold to obtain a uniform glass precursor.

10. The method according to claim 7, wherein the performing annealing and heat treatment on the glass precursor to obtain the nanocrystal glass comprises:
transferring the glass precursor to a muffle furnace for annealing processing, wherein the annealing processing means that a temperature of the muffle furnace is cooled to a temperature 30°C-50°C below a glass transition temperature, the temperature is maintained for 3 h-8 h, stepped cooling is performed at a cooling rate of 0.1°C/h-10°C/h, and a temperature of each phase is maintained for 3 h-8 h, until the temperature is cooled to a room temperature, to obtain the nanocrystal glass.

11. The method according to claim 7, wherein a manner of introducing Al₂O₃ is Al₂O₃ or Al(OH)₃, a manner of introducing CaO is CaCO₃, a manner of introducing the alkaline earth metal oxide is an alkaline earth metal carbonate, a manner of introducing the alkali metal oxide is an alkali metal carbonate, and a manner of introducing B₂O₃ is B(OH)₃.

12. The method according to claim 11, wherein the alkaline earth metal carbonate comprises MgCO₃, SrCO₃, and BaCO₃, and content of various types of alkaline earth metal ions separately accounts for 2%-10% of a total amount of the raw material in terms of mole percents of oxides.

13. The method according to any one of claims 11-12, wherein the alkali metal carbonate comprises one or more of Li₂CO₃, Na₂CO₃, and K₂CO₃.

## Patentansprüche

1. Nanokristallines Glas, wobei das nanokristalline Glas die folgenden Komponenten in Molprozent der Oxide umfasst:
Al₂O₃: 30%-55%;
CaO: 25%-55%;
B₂O₃: 0%-10%;
Sb₂O₃: 0%-1%;
ein Erdalkalimetalloxid: 8%-20%; und
ein Alkalimetalloxid: 3%-15%; wobei
das Erdalkalimetalloxid eines oder mehrere von MgO, SrO und BaO umfasst; und
das Alkalimetalloxid Li₂O: 1%-10%; Na₂O: 2%-10%; und K₂O: 0%-10% umfasst.

2. Nanokristallines Glas nach Anspruch 1, wobei das Erdalkalimetalloxid mindestens zwei von MgO, SrO und BaO umfasst und der Gehalt an verschiedenen Arten von Erdalkalimetallionen 2%-10% in Molprozent beträgt.

3. Nanokristallines Glas nach Anspruch 1, umfassend nanokristalline Partikel, wobei die nanokristallinen Partikel aus einer oder mehreren Kristallphasen von CaAl₂O₄, MgAl₂O₄ und SrAl₂O₄ sein können; wobei der Gehalt der nanokristallinen Partikel 50% oder mehr der Gesamtmenge des gesamten nanokristallinen Glases ausmacht.

4. Nanokristallines Glas nach Anspruch 3, wobei die durchschnittliche Partikelgröße der nanokristallinen Partikel 1 nm bis 50 nm beträgt und der Gehalt der nanokristallinen Partikel 80% oder mehr der Gesamtmenge des gesamten nanokristallinen Glases ausmacht.

5. Nanokristallines Glas nach einem der Ansprüche 1-4, wobei die Vickers-Härte des nanokristallinen Glases 8,4 GPa bis 9,1 GPa beträgt.

6. Nanokristallines Glas nach einem der Ansprüche 1-4, wobei der Elastizitätsmodul des nanokristallinen Glases 110 GPa bis 129 GPa beträgt.

7. Herstellungsverfahren für nanokristallines Glas, umfassend:
Einwiegen (S510) eines Rohmaterials, wobei die Komponenten des Rohmaterials in Molprozent der Oxide wie folgt sind: Al₂O₃: 30%-55%; CaO: 25%-55%; B₂O₃: 0%-10%; und Sb₂O₃: 0%-1%; ein Erdalkalimetalloxid: 8%-20%; und ein Alkalimetalloxid: 3%-15%, wobei das Erdalkalimetalloxid eines oder mehrere von MgO, SrO und BaO umfasst und das Alkalimetalloxid Li₂O: 1%-10%; Na₂O: 2%-10%; und K₂O: 0%-10% umfasst;
Mahlen (S520) des eingewogenen Rohmaterials zur Erzielung eines Mischpulvers;
Schmelzen (S530) des Mischpulvers zur Erzielung einer Glasschmelze;
Gießen (S540) der Glasschmelze zur Erzielung eines Glasvorstufe; und
Durchführung (S550) eines Temper- und Wärmebehandlungsprozesses an der Glasvorstufe, um das Nanokristallglas zu erhalten.

8. Verfahren nach Anspruch 7, wobei das Schmelzen (S530) des gemischten Pulvers zum Erhalt einer Glasschmelze umfasst:
Einbringen des gemischten Pulvers in einen Tiegel, anschließendes Platzieren des Tiegels in einen Schmelzofen und Durchführen des Schmelzvorgangs für 1 h bis 3 h bei 1400°C-1600°C, um die Glasschmelze zu erhalten.

9. Verfahren nach Anspruch 7, wobei das Gießen (S540) der Glasschmelze zum Erhalt einer Glasvorstufe umfasst:
Gießen der Glasschmelze auf eine vorgewärmte Form, um eine gleichmäßige Glasvorstufe zu erhalten.

10. Verfahren nach Anspruch 7, wobei die Durchführung der Temper- und Wärmebehandlung an der Glasvorstufe zum Erhalt des nanokristallinen Glases umfasst:
Überführen der Glasvorstufe in einen Muffelofen zur Temperbehandlung, wobei die Temperbehandlung bedeutet, dass die Temperatur des Muffelofens auf eine Temperatur 30°C-50°C unterhalb der Glasübergangstemperatur abgekühlt wird, die Temperatur für 3 h-8 h gehalten wird, eine stufenweise Abkühlung mit einer Abkühlrate von 0,1°C/h-10°C/h durchgeführt wird und die Temperatur jeder Phase für 3 h-8 h gehalten wird, bis die Temperatur auf Raumtemperatur abgekühlt ist, um das nanokristalline Glas zu erhalten.

11. Verfahren nach Anspruch 7, wobei eine Art der Einführung von Al₂O₃ Al₂O₃ oder Al(OH)₃ ist, eine Art der Einführung von CaO CaCO₃ ist, eine Art der Einführung des Erdalkalimetalloxids ein Erdalkalimetallcarbonat ist, eine Art der Einführung des Alkalimetalloxids ein Alkalimetallcarbonat ist und eine Art der Einführung von B₂O₃ B(OH)₃ ist.

12. Verfahren nach Anspruch 11, wobei das Erdalkalimetallcarbonat MgCO₃, SrCO₃ und BaCO₃ umfasst und der Gehalt verschiedener Arten von Erdalkalimetallionen jeweils 2%-10% der Gesamtmenge des Rohmaterials in Molprozent der Oxide ausmacht.

13. Verfahren nach einem der Ansprüche 11-12, wobei das Alkalimetallcarbonat eines oder mehrere von Li₂CO₃, Na₂CO₃ und K₂CO₃ umfasst.

## Revendications

1. Verre nanocristallin, dans lequel le verre nanocristallin comprend les composants suivants en termes de pourcentages molaires d'oxydes :
Al₂O₃ : 30 %-55 % ;
CaO : 25 %-55 % ;
B₂O₃ : 0 %-10 % ;
Sb₂O₃ : 0 %-1 % ;
un oxyde de métal alcalino-terreux : 8 %-20 % ; et
un oxyde de métal alcalin : 3 %-15 % ; dans lequel
l'oxyde de métal alcalino-terreux comprend un ou plusieurs éléments parmi MgO, SrO et BaO ; et
l'oxyde de métal alcalin comprend Li₂O : 1 %-10 % ; Na₂O: 2 %-10 % ; et K₂O : 0 %-10 %.

2. Verre nanocristallin selon la revendication 1, dans lequel l'oxyde de métal alcalino-terreux comprend au moins deux éléments parmi MgO, SrO et BaO, et que la teneur en divers types d'ions de métaux alcalino-terreux est comprise entre 2 % et 10 % en termes de pourcentages molaires.

3. Verre nanocristallin selon la revendication 1, comprenant des particules nanocristallines, dans lequel les particules nanocristallines peuvent être constituées d'une ou plusieurs phases cristallines de CaAl₂O₄, MgAl₂O₄ et SrAl₂O₄ ; dans lequel la teneur en particules nanocristallines représente 50 % ou plus de la quantité totale de l'ensemble du verre nanocristallin.

4. Verre nanocristallin selon la revendication 3, dans lequel la taille moyenne des particules nanocristallines est comprise entre 1 nm et 50 nm, et que la teneur en particules nanocristallines représente 80 % ou plus de la quantité totale de l'ensemble du verre nanocristallin.

5. Verre nanocristallin selon l'une quelconque des revendications 1 à 4, dans lequel la dureté Vickers du verre nanocristallin est comprise entre 8,4 GPa et 9,1 GPa.

6. Verre nanocristallin selon l'une quelconque des revendications 1 à 4, dans lequel le module de Young du verre nanocristallin est compris entre 110 GPa et 129 GPa.

7. Procédé de préparation d'un verre nanocristallin, comprenant :
le pesage (S510) d'une matière première, dans lequel, en termes de pourcentages molaires d'oxydes, les composants de la matière première sont : Al₂O₃ : 30 %-55 % ; CaO : 25 %-55 % ; B₂O₃ : 0 %-10 % ; et Sb₂O₃ : 0 %-1 % ; un oxyde de métal alcalino-terreux : 8 %-20 % ; et un oxyde de métal alcalin : 3 %-15 %, dans lequel l'oxyde de métal alcalino-terreux comprend un ou plusieurs éléments parmi MgO, SrO et BaO, et l'oxyde de métal alcalin comprend Li₂O : 1 %-10 % ; Na₂O: 2 %-10 % ; et K₂O: 0 %-10 % ;
le broyage (S520) de la matière première pesée pour obtenir une poudre mélangée ;
la fusion (S530) de la poudre mélangée pour obtenir un verre fondu ;
le coulage (S540) du verre fondu pour obtenir un précurseur de verre ; et
la réalisation (S550) d'un recuit et d'un traitement thermique sur le précurseur de verre pour obtenir le verre nanocristallin.

8. Procédé selon la revendication 7, dans lequel la fusion (S530) de la poudre mélangée pour obtenir un verre fondu comprend :
le placement de la poudre mélangée dans un creuset, puis le placement du creuset dans un four de fusion, et la réalisation d'une fusion pendant 1 h à 3 h à une température comprise entre 1400°C et 1600°C pour obtenir le verre fondu.

9. Procédé selon la revendication 7, dans lequel le coulage (S540) du verre fondu pour obtenir un précurseur de verre comprend :
le coulage du verre fondu sur un moule préchauffé pour obtenir un précurseur de verre uniforme.

10. Procédé selon la revendication 7, dans lequel la réalisation d'un recuit et d'un traitement thermique sur le précurseur de verre pour obtenir le verre nanocristallin comprend :
le transfert du précurseur de verre dans un four à moufle pour un traitement de recuit, dans lequel le traitement de recuit signifie qu'une température du four à moufle est refroidie jusqu'à une température inférieure de 30°C à 50°C à la température de transition vitreuse, la température est maintenue pendant 3 h à 8 h, un refroidissement par paliers est effectué à une vitesse de refroidissement de 0,1°C/h à 10°C/h, et une température de chaque phase est maintenue pendant 3 h à 8 h, jusqu'à ce que la température soit refroidie à la température ambiante, pour obtenir le verre nanocristallin.

11. Procédé selon la revendication 7, dans lequel un mode d'introduction de Al₂O₃ est Al₂O₃ ou Al(OH)₃, un mode d'introduction de CaO est CaCO₃, un mode d'introduction de l'oxyde de métal alcalino-terreux est un carbonate de métal alcalino-terreux, un mode d'introduction de l'oxyde de métal alcalin est un carbonate de métal alcalin, et un mode d'introduction de B₂O₃ est B(OH)₃.

12. Procédé selon la revendication 11, dans lequel le carbonate de métal alcalino-terreux comprend MgCO₃, SrCO₃ et BaCO₃, et la teneur en divers types d'ions de métaux alcalino-terreux représente séparément 2% à 10% d'une quantité totale de la matière première en termes de pourcentages molaires d'oxydes.

13. Procédé selon l'une quelconque des revendications 11 à 12, dans lequel le carbonate de métal alcalin comprend un ou plusieurs parmi Li₂CO₃, Na₂CO₃ et K₂CO₃.
